# EUROPÄISCHE PATENTSCHRIFT

(11) **EP 1 337 725 B1**
(45) Veröffentlichungstag und Bekanntmachung des Hinweises auf die Patenterteilung: **31.08.2005**
(21) Anmeldenummer: 01998703.1
(22) Anmeldetag: 29.11.2001
(51) Int. Cl.: E04F 13/04, E04B 9/22

(54) **VERFAHREN ZUM BEFESTIGEN VON WÄRMEDÄMMPLATTEN SOWIE DÜBEL DAFÜR**
METHOD FOR FIXING INSULATING BOARDS AND CORRESPONDING DOWEL
PROCEDE POUR FIXER DES PLAQUES D'ISOLATION THERMIQUE ET DOUILLE NECESSAIRE A CET EFFET

(30) Priorität: 01.12.2000 AT 20182000
(43) Veröffentlichungstag der Anmeldung: 27.08.2003
(73) Patentinhaber: Franz Stransky Gesellschaft m.b.H, 1150 Wien (AT)
(72) Erfinder: JANDL, Johann, A-3011 Tullnerbach (AT)
(74) Vertreter: Müllner, Erwin
(86) Internationale Anmeldenummer: PCT/AT2001/000376
(87) Internationale Veröffentlichungsnummer: WO 2002/044497

(56) Entgegenhaltungen:
- DE-A- 3 124 686
- FR-A- 2 358 521
- US-A- 2 151 597

## Beschreibung

Die vorliegende Erfindung betrifft ein Verfahren zum Befestigen von Wärmedämmplatten an einer Wand oder einer Decke, insbesondere zum nachträglichen Anbringen an einem Altbau. Sie betrifft weiters einen Dübel zum Befestigen von Wärmedämmplatten an einer Wand oder einer Decke, insbesondere zum nachträglichen Anbringen an einem Altbau, wobei der Dübel eine Spreizzone und einen Dübelkopf aufweist und wobei der Dübelkopf mehrere sternförmig wegstehende Arme aufweist.

Eine gute Wärmeisolierung von Gebäuden kann den Energieverbrauch drastisch herabsetzen. Dies bewirkt nicht nur auf lange Sicht einen Kostenvorteil, sondern ist auch aus Umweltschutzgründen anzustreben (Verringerung der Kohlendioxidproduktion). Aus diesen Gründen werden nicht nur Neubauten entsprechend gedämmt, auch Altbauten werden immer häufiger nachträglich mit einer Wärmedämmung versehen.

Bei Neubauten können die Wärmedämmplatten auf eine glatte Wand (z.B. aus Ziegeln oder Betonsteinen) einfach aufgeklebt werden. Bei Altbauten ist dies in der Regel nicht möglich, weil das Mauerwerk nicht ausreichend stabil ist. Würde man hier Wärmedämmplatten aufkleben, so wäre die Gefahr sehr groß, dass Wärmedämmplatten zusammen mit einem Teil des lockeren Putzes oder Mauerwerks herabfallen.

Bei Altbauten werden daher die Wärmedämmplatten üblicherweise angeschraubt oder angenagelt. Nachteilig ist dabei, dass die Schrauben bzw. Nägel, die ja die Wärmedämmung durchdringen, Kältebrücken bilden, wodurch die Wirkung der Dämmung herabgesetzt wird. Aus der DE-A-3 124 686 und der FR-A-2 358 521 ist bekannt, Dübelhülsen mit Spreizelement durch die Wärmedämmung und in ein Loch der Wand zu schieben und dann durch Einschlagen des Spreizelements in der Wand zu fixieren. Dabei werden ebenfalls kältebrücken gebildet.

Aus der US-4899513-A ist bekannt, dass auf Platten zur Marmorimitation Nägel aufgeklebt werden. Auf die zu verkleidende Fläche werden Schienen montiert, die Löcher haben, in welche die Nägel gesteckt werden sollen. Die Nägel werden genau an den entsprechenden Stellen auf die Platte aufgeklebt, und dann wird die Platte samt den Nägeln auf die Schienen gesteckt.

Aus der US-2151597-A ist ein Verfahren zur Befestigung von Glasplatten bekannt, bei dem zunächst Holzdübel in die Mauer eingemauert werden. Auf diese Holzdübel werden dann Scheiben genagelt, die Löcher aufweisen. Auf diese Scheiben wird Klebstoff aufgebracht, wonach die Glasplatten angedrückt und somit angeklebt werden.

In beiden Fällen handelt es sich um steife Platten, die mit Wärmedämmplatten nicht unmittelbar vergleichbar sind.

In der DE-19701122A1 ist ein Verfahren und ein Dübel zum Befestigen von Wärmedämmplatten beschrieben. Es wird dort das Problem behandelt, dass durch thermische Spannungen die Dübel und Nägel starken Biegekräften ausgesetzt werden. Dieses Problem besteht darin, dass Wärmedämmplatten normalerweise verputzt werden und der Putz eine stark unterschiedliche Temperatur (bei Sonne bis 60°C) verglichen mit dem Mauerwerk haben kann. Damit werden Dübel und Nägel, die die Wärmedämmplatten durchdringen, starken Biegekräften ausgesetzt, die die Tragfähigkeit der gesamten Befestigung erheblich beeinträchtigen können. Gelöst wird dieses Problem gemäß dem Vorhalt dadurch, dass der Dübel eine Spreizzone und einen Dübelkopf aufweist, wobei an die Spreizzone ein Ring anschließt, der mit dem Dübelkopf durch biegsame Stege verbunden ist. Befestigt wird der Dübel im Mauerwerk dadurch, dass eine Schraube in den Ring (und damit in die Spreizzone) eingeschraubt wird. Die Schraube endet somit knapp über dem Mauerwerk, durch die Wärmedämmplatten ragen nur die Stege des Dübels hindurch. Der Dübelkopf besteht aus einem Netzwerk mit im wesentlichen kreisförmiger Außenkontur. Dieses liegt an der Wärmedämmplatte außen an und wird von der Verputzschicht überdeckt, wobei die Verputzschicht durch die Öffnungen des Netzwerks zum Teil durchdringt.

### OFFENBARUNG DER ERFINDUNG

Es ist Aufgabe der vorliegenden Erfindung, ein Verfahren bzw. einen Dübel zum Befestigen von Wärmedämmplatten an einer Wand oder einer Decke zu schaffen, bei dem das Problem der Kältebrücken und der thermischen Spannungen nicht auftritt.

Diese Aufgabe wird durch ein Verfahren der eingangs genannten Art erfindungsgemäß dadurch gelöst, dass man Dübel, die einen Dübelkopf aufweisen, in einer derartigen Anzahl auf der Wand bzw. der Decke versetzt, dass auf jede Wärmedämmplatte mehrere Dübel kommen, dass man auf die Dübelköpfe der Dübel und gegebenenfalls auf die Wand bzw. die Decke Klebstoff aufbringt und danach die Wärmedämmplatten andrückt.

Sie wird weiters durch einen Dübel der eingangs genannten Art erfindungsgemäß dadurch gelöst, dass die Spreizzone und der Dübelkopf unmittelbar benachbart sind.

Erfindungsgemäß werden also Dübel in der Wand bzw. der Decke versetzt, was auch bei Altbauten möglich ist. Die Verbindung zwischen der Wärmedämmplatte und der Wand bzw. der Decke erfolgt dann dadurch, dass die Wärmedämmplatte an den Dübeln, die in der Wand versetzt sind, angeklebt wird. Der Dübel durchdringt die Wärmedämmplatte nicht, deshalb sind die Spreizzone und der Dübelkopf unmittelbar benachbart. Zusätzlicher Klebstoff im Bereich zwischen den Dübeln stabilisiert bei brüchigem Mauerwerk die Wand bzw. die Decke, an den Stellen, wo das Mauerwerk noch stabil ist, wird die Festigkeit der Verbindung zwischen Wärmedämmplatten und Wand bzw. Decke erhöht. Als Klebstoff kommen vor allem dispersionsvergütete, Kleber mit Füllstoffen in Frage, wie sie im Bauswesen üblich sind. Sie können zementhaltig oder zementfrei sein.

Verglichen mit der bisherigen Art, Wärmedämmplatten zu befestigen (durch Anschrauben oder Annageln) ergeben sich zahlreiche Vorteile. Zunächst ist hervorzuheben, dass es keine Kältebrücken mehr gibt. Dies ist natürlich von umso größerer Bedeutung, je dicker die Wärmedämmplatten sind, d.h. je besser sie isolieren. Ein weiterer Vorteil ist darin zu sehen, dass die Dübel unabhängig von der Dicke der Wärmedämmplatten sind, sodass man mit relativ wenigen Typen auskommt. Schließlich gibt es auch beim Recycling Vorteile: Der Dämmstoff ist frei von Metall und weist auch sonst keine Verunreinigungen auf. Weiters ist es günstig, dass beim Setzen des Dübels die Sicht nicht beeinträchtigt ist, weil ja die Wärmedämmplatte erst danach angeklebt wird. Dadurch sieht man sofort, ob der Dübel gut verankert ist.

Schließlich ist auch das Problem der Wärmespannungen gelöst, wie es in der DE-19701122A1 angesprochen ist. Da bei der erfindungsgemäßen Lösung keine Elemente die Wärmedämmplatte durchdringen und die Wärmedämmplatte selbst ausreichend nachgiebig ist, tritt dieses Problem hier gar nicht erst auf.

Ein weiterer Vorteil besteht auch darin, dass durch das Verkleben keinerlei Bewegungsfreiheit zwischen Dübel und Wärmedämmplatte möglich ist. Bei einer Befestigung durch Nägel, die die Wärmedämmplatte durchdringen, bleibt oft ein bisschen "Luft" frei, sodass sich die Wärmedämmplatten bei Wind geringfügig bewegen können, was zu unangenehmen Geräuschen und zur Beschädigung des Verputzes führen kann. Auch dehnt sich der Nagel bzw. der Dübel infolge seiner großen Länge bei Belastung, was die Bewegungsfreiheit der Wärmedämmplatten weiter erhöht.
Auf diese Weise wird eine formschlüssige Verbindung zwischen Dübelkopf und Klebstoff erzielt, der Dübelkopf wirkt als Armierung des Klebstoffs.

Ein ähnlicher Effekt wird bewirkt, wenn man Dübel verwendet, deren Dübelkopf ein Glasfasergitter ist. Auch hier dringt der Klebstoff in die Klebefläche ein und gelangt bis auf deren Rückseite, so dass sich wiederum eine formschlüssige Verbindung ergibt.

Vorzugsweise ist auf den Dübel eine flexible Verstärkungsplatte aufgesteckt, die im montierten Zustand zwischen der Wand bzw. der Decke und den Armen des Dübels liegt. Dadurch hat sich gezeigt, dass die Zugfestigkeit der Klebeverbindung stark erhöht wird (etwa auf das Doppelte).

Schließlich ist es zweckmäßig, wenn ein Ring zum Markieren der Klebefläche an den Armen fixiert ist. Auf diese Weise sieht der Verarbeiter eindeutig, ob er noch mehr Klebstoff auftragen muss oder ob die aufgetragene Menge bereits ausreichend ist: der Klebstoff soll den Ring berühren.

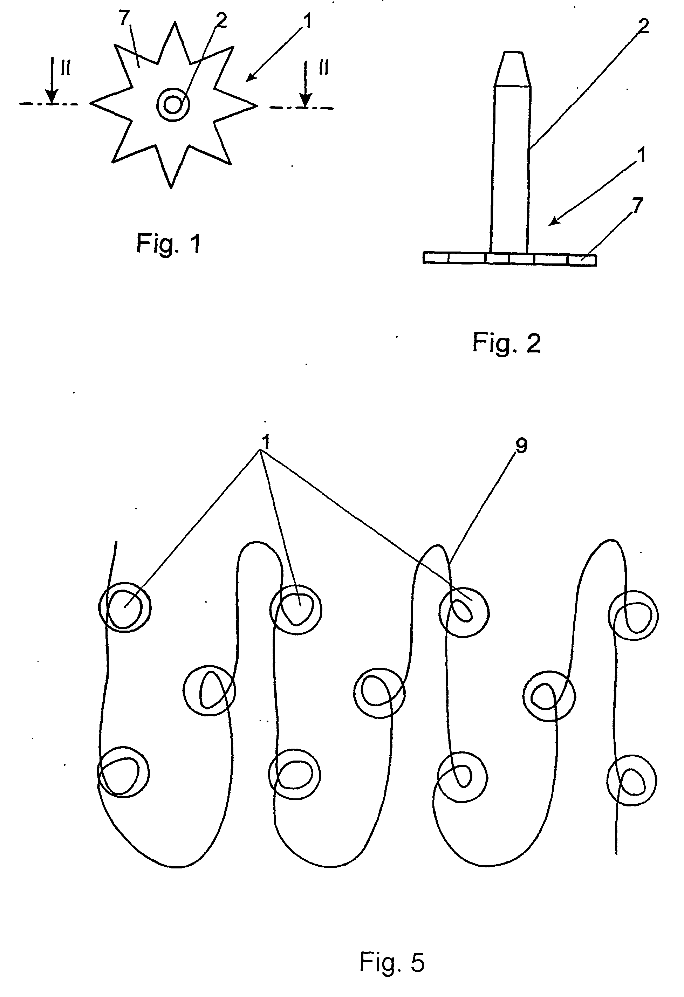

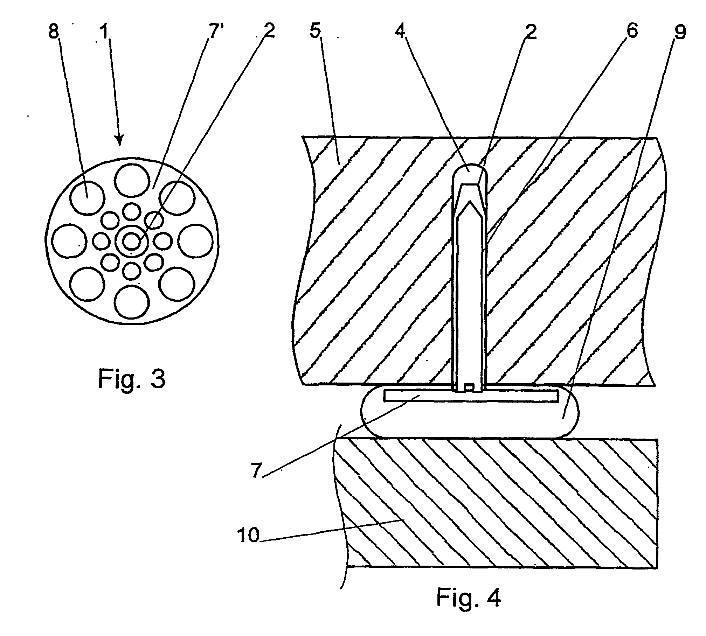

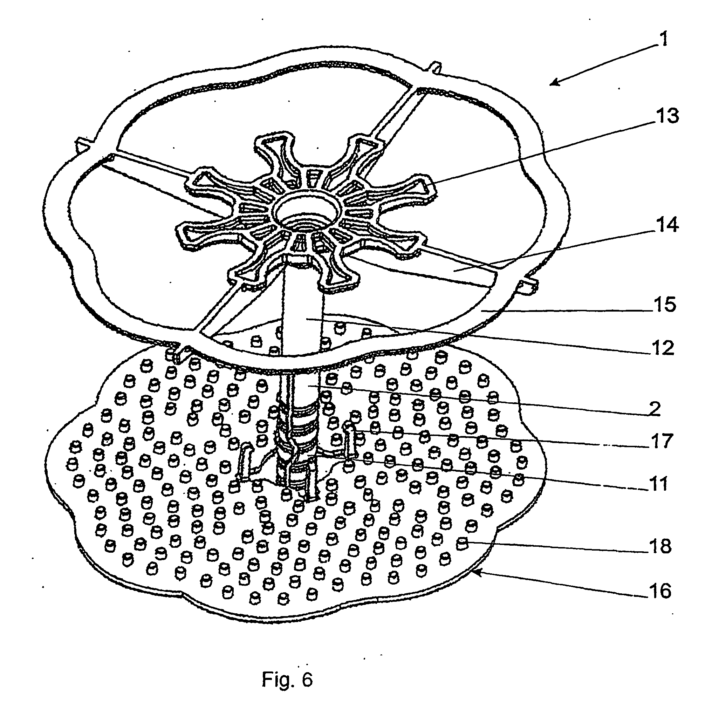

Anhand der beiliegenden Figuren wird die vorliegende Erfindung näher erläutert. Es zeigt: Fig.1 eine Draufsicht auf einen Dübel, der für das erfindungsgemäße Verfahren geeignet ist; Fig.2 einen Schnitt entlang der Linie II-II in Fig.1; Fig.3 eine Ansicht analog zu der von Fig.1, allerdings eines anderen Dübels; Fig.4 eine Ansicht analog zu der von Fig.2, allerdings eines in der Wand versetzten Dübels, der mit einer Wärmedämmplatte verklebt ist; Fig.5 eine mögliche Anordnung von Dübeln in einer Wand sowie eine mögliche Art der Aufbringung des Klebstoffs; und Fig. 6 einen nicht erfindungsgemäßen Dübel, der jedoch zur Ausführung des erfindungsgemäßen verfahrens geeignet ist.

Anhand der Fig.1 und 2 wird zunächst ein Dübel beschrieben. Der Dübel 1 weist einen Dübelkörper 2 auf, der analog wie die herkömmlichen Spreizdübel aufgebaut sein kann. Er kann also in ein Bohrloch 4 (siehe Fig.4) in einer Wand 5 eingesetzt und durch Einschrauben eines Gewindestifts 6 oder durch Einschlagen eines Nagels verspreizt werden. Unterschiedlich zu einem herkömmlichen Dübel ist, dass der Dübelkörper 2 sich an seinem äußeren Ende stark verbreitert, so dass sich ein Dübelkopf 7 (siehe insbesondere Fig.1 und Fig.2) ergibt. Der Dübelkopf 7 kann sternförmig sein (siehe Fig.1), er kann aber auch - siehe den Dübelkopf 7' in Fig.3 - kreisförmig ausgebildet sein. In letzterem Fall ist es zweckmäßig, wenn er Löcher 8 aufweist.

Das erfindungsgemäße Verfahren wird wie folgt durchgeführt:

Man versetzt die Dübel 1 in irgendeiner regelmäßigen Weise auf der wärmezudämmenden Wand (siehe Fig.5). Dann bringt man den Klebstoff 9 auf, z.B. in einer mäanderförmigen Bahn. Dabei ist zu beachten, dass jeder Dübel 1 mit einer ausreichenden Menge an Klebstoff versehen wird; überschüssiger Klebstoff schadet nicht, er wird einfach zur Seite gedrückt, wogegen zu wenig Klebstoff die Festigkeit der Verbindung beeinträchtigen kann. Die Menge an Klebstoff zwischen den Dübeln ist weniger kritisch. Daher wird der Klebstoff 9 gemäß Fig.5 im Bereich jedes Dübels 1 in einer kleinen Schleife aufgebracht.

Nachdem der Klebstoff 9 aufgebracht wurde, wird die Wärmedämmplatte 10 (siehe Fig.4) aufgedrückt. Dabei wird der Klebstoff zwischen den Armen des sternförmigen Dübelkopfes 7 (bzw. bei der Ausführungsform gemäß Fig.3 durch die Löcher 8) durch den Dübelkopf 7 bzw. 7' bis zur Wand 5 gedrückt. Der Klebstoff 9 umgreift somit den Dübelkopf 7 bzw. 7' formschlüssig, so dass die Haftzugfestigkeit zwischen Klebstoff 9 und Dübelkopf 7 bzw. 7' für die Festigkeit der Verbindung nicht maßgebend ist.

Wie man sieht, wird die Wärmedämmplatte 10 von keinerlei Befestigungselementen durchsetzt, so dass es keine Kältebrücken geben kann.

Der in Fig. 6 dargestellte, nicht erfindungsgemäße Dübel 1' ist im Prinzip ähnlich aufgebaut wie der zuvor beschriebene. Er weist einen Dübelkörper 2 auf, der eine Spreizzone 11 hat, welche vom Dübelkopf 13 durch einen kurzen zylindrischen Abzwischen den Dübeln ist weniger kritisch. Daher wird der Klebstoff 9 gemäß Fig.5 im Bereich jedes Dübels 1 in einer kleinen Schleife aufgebracht.

Nachdem der Klebstoff 9 aufgebracht wurde, wird die Wärmedämmplatte 10 (siehe Fig.4) aufgedrückt. Dabei wird der Klebstoff zwischen den Armen des sternförmigen Dübelkopfes 7 (bzw. bei der Ausführungsform gemäß Fig.3 durch die Löcher 8) durch den Dübelkopf 7 bzw. 7' bis zur Wand 5 gedrückt. Der Klebstoff 9 umgreift somit den Dübelkopf 7 bzw. 7' formschlüssig, so dass die Haftzugfestigkeit zwischen Klebstoff 9 und Dübelkopf 7 bzw. 7' für die Festigkeit der Verbindung nicht maßgebend ist.

Wie man sieht, wird die Wärmedämmplatte 10 von keinerlei Befestigungselementen durchsetzt, so dass es keine Kältebrücken geben kann.

Der in Fig. 6 dargestellte Dübel 1' ist im Prinzip ähnlich aufgebaut wie der zuvor beschriebene. Auch er weist einen Dübelkörper 2 auf, der eine Spreizzone 11 hat, welche vom Dübelkopf 13 nur durch einen kurzen zylindrischen Abschnitt 12 getrennt ist. Der Dübelkopf 13 weist vier radial abstehende Arme 14 auf. An ihrem äußeren Ende tragen sie einen Ring 15. Dieser Ring 15 markiert die Mindestgröße für die Fläche, die von Klebstoff bedeckt werden soll.

Auf den Dübel 1' wird eine Verstärkungsplatte 16 aufgeschoben, welche mit Armen 17 am Dübelkopf 13 fixiert wird. Diese Verstärkungsplatte 17 besteht aus Kunststoff und ist mit Noppen 18 versehen. Dadurch wird durch solch eine Verstärkungsplatte 17 die Festigkeit der Verbindung erheblich gesteigert. Maßgebend dafür ist die Zugfestigkeit der Verstärkungsplatte.

Die Erfindung wurde anhand der Dämmung einer Wand erläutert. Genauso kann aber natürlich eine Decke gedämmt werden.

## Patentansprüche

1. Verfahren zum Befestigen von Wärmedämmplatten (10) an einer Wand (5) oder einer Decke, insbesondere zum nachträglichen Anbringen an einem Altbau, **dadurch gekennzeichnet, dass** man Dübel (1), die einen Dübelkopf (7,7',13) aufweisen, in einer derartigen Anzahl auf der Wand (5) bzw. der Decke versetzt, dass auf jede Wärmedämmplatte (10) mehrere Dübel kommen, dass man auf die Dübelköpfe (7,7',13) der Dübel (1) und gegebenenfalls auf die Wand (5) bzw. die Decke Klebstoff (9) aufbringt und danach die Wärmedämmplatten (10) andrückt.

2. Verfahren nach Anspruch 1, **dadurch gekennzeichnet, dass** man Dübel (1) verwendet, deren Dübelkopf (7,7',13) Öffnungen (8) zum Durchtritt des Klebstoffs (9) auf die Rückseite aufweist, insbesondere Dübel (1) mit sternförmigem Dübelkopf (7).

3. Verfahren nach Anspruch 1, **dadurch gekennzeichnet, dass** man Dübel (1) verwendet, deren Dübelkopf ein Glasfasergitter

4. Dübel (1) zum Befestigen von Wärmedämmplatten (10) an einer Wand (5) oder einer Decke, insbesondere zum nachträglichen Anbringen an einem Altbau, wobei der Dübel (1) eine Spreizzone und einen Dübelkopf (7) aufweist und wobei der Dübelkopf (7) mehrere sternförmig wegstehende Arme aufweist, **dadurch gekennzeichnet, dass** die Spreizzone und der Dübelkopf (7) unmittelbar benachbart sind.

5. Dübel nach Anspruch 4, **dadurch gekennzeichnet, dass** auf den Dübel (1) eine flexible Verstärkungsplatte (16) aufgesteckt ist, die im montierten Zustand zwischen der Wand bzw. der Decke und den Armen (14) des Dübels (1) liegt.

6. Dübel nach Anspruch 4 oder 5, **dadurch gekennzeichnet, dass** ein Ring (15) zum Markieren der Klebefläche an den Armen (14) fixiert ist.

## Claims

1. Method for fastening heat insulating boards (10) to a wall (5) or a ceiling, in particular for retrofitting to an old building, **characterised in that** pins (1), which have a pin head (7, 7', 13), are offset on the wall (5) or the ceiling in a number such that a plurality of pins are provided on each heat insulating board (10), **in that** adhesive (9) is applied to the pin heads (7, 7', 13) of the pins (1) and optionally on the wall (5) or the ceiling and the heat insulating boards (10) are then pressed on.

2. Method according to claim 1, **characterised in that** pins (1) are used, the pin head (7, 7', 13) of which has openings (8) for the penetration of the adhesive (9) onto the rear, in particular pins (1) with a star-shaped pin head (7).

3. Method according to claim 1, **characterised in that** pins (1) are used, the pin head of which is a glass fibre grid.

4. Pins (1) for fastening heat insulating boards (10) to a wall (5) or a ceiling, in particular for retrofitting to an old building, wherein the pin (1) has a spreading zone and a pin head (7) and wherein the pin head (7) has a plurality of arms projecting in a star-shape, **characterised in that** the spreading zone and the pin head (7) are directly adjacent.

5. Pin according to claim 4, **characterised in that** a flexible reinforcing plate (16) which, in the fitted state, is located between the wall or the ceiling and the arms (14) of the pin(1), is plugged onto the pin (1).

6. Pin according to claim 4 or 5, **characterised in that** a ring (15) is fixed to the arms (14) to mark the adhesive area.

## Revendications

1. Procédé pour fixer des plaques d'isolation thermique (10) à une paroi (5) ou à un plafond, en particulier par une pose ultérieure sur un bâtiment ancien, **caractérisé en ce qu'**on déplace sur la paroi (5) ou le plafond des chevilles (1) qui présentent des têtes de cheville (7, 7', 13), dans un nombre tel que sur chaque plaque d'isolation thermique (10) viennent plusieurs chevilles, et **en ce qu'**on munit les têtes de cheville (7, 7', 13) de chevilles (1) et, le cas échéant, la paroi ou le plafond, d'adhésif et qu'ensuite on appuie les plaques d'isolation thermique (10).

2. Procédé selon la revendication 1, **caractérisé en ce qu'**on utilise les chevilles (1) dont la tête de cheville (7, 7', 13) présente des ouvertures pour la traversée de l'adhésif (9) jusqu'au verso, en particulier des chevilles (1) avec une tête de cheville (7) en forme d'étoile.

3. Procédé selon la revendication 1, **caractérisé en ce qu'**on utilise des chevilles (1) dont la tête de cheville est une grille en fibres de verre.

4. Cheville (1) pour la fixation de plaques d'isolation thermique (10) à une paroi (5) ou un plafond, en particulier pour une pose ultérieure sur un bâtiment ancien, la cheville (1) présentant une zone d'écartement et une tête de cheville (7) et la tête de cheville (7) présentant plusieurs bras s'écartant en forme d'étoile, **caractérisée en ce que** la zone d'écartement et la tête de cheville (7) sont immédiatement voisines.

5. Cheville selon la revendication 4, **caractérisée en ce qu'**une plaque de renfort (16) flexible recouvre la cheville, la plaque de renfort étant située, dans l'état monté, entre la paroi ou le plafond et les bras (14) de la cheville (1).

6. Cheville selon la revendication 4 ou 5, **caractérisé en ce qu'**un anneau (15), destiné à marquer la surface d'adhésion, est fixé aux bras (14).
